Europäisches Patentamt

European Patent Office

Office européen des brevets

(11) Publication number: **0 323 524**
A1

# (12) EUROPEAN PATENT APPLICATION

published in accordance with Art. 158(3) EPC

(21) Application number: 88906076.0

(22) Date of filing: 07.07.88

Data of the international application taken as a basis:

(86) International application number:
PCT/JP88/00683

(87) International publication number:
WO89/00114 (12.01.89 89/02)

(51) Int. Cl.³: **B 60 C 11/04**
B 60 C 27/16, B 60 C 27/10

(30) Priority: 07.07.87 JP 169185/87
27.11.87 JP 299094/87

(43) Date of publication of application:
12.07.89 Bulletin 89/28

(84) Designated Contracting States:
AT BE CH DE FR GB IT LI LU NL SE

(71) Applicant: SUZUKI, Toshimi
355-43 Oowadashinden, Yachiyoshi
Chiba(JP)

(72) Inventor: SUZUKI, Toshimi
355-43 Oowadashinden, Yachiyoshi
Chiba(JP)

(74) Representative: Popp, Eugen, Dr. et al,
MEISSNER, BOLTE & PARTNER Widenmayerstrasse 48
Postfach 86 06 24
D-8000 München 86(DE)

(54) **TREAD PATTERN OF TIRE AND BELT TIRE.**

(57) Long-hour running performance is improved on an ordinary road, a snowed road surface, a muddy and soft road surface, sands, a gravel road, etc., by using recesses for receiving snow, mud or sand therein disposed at the center of the width of a tire, spike projections on both sides of the width, projections capable of rocking near the center of the width and their combinations on various tires and belt tires as a tread pattern. The belt tire is a belt-like rubber member to be used by fitting it to a tire. If the tread pattern, in addition to each component, of the present invention described above is provided, the belt tire has high durability and excellent long-hour running performance.

FIG. 18

EP 0 323 524 A1

## TITLE OF THE INVENTION
## TREAD PATTERN AND BELTED TIRE

### BACKGROUND OF THE INVENTION

This invention relates to a tread pattern formed on a tire of various vehicles or a belted tire.

This invention also relates to a tire of various vehicles or a belted tire which is secured thereon, and more particularly to a belted tire which enables a safe drive on normal roads as well as under adverse conditions wherein a drive with normally equipped tires is difficult, particularly on snow, muddy road, sandy soil and gravelled road.

Tire chains, studded or spike tires, and snow tires have been used for traveling on snow and icy roads for anti-skidding purposes, although they have various drawbacks.

On normal roads like pavement, tire chains cause a high noise level failing to provide a comfortable ride, and they are susceptible to be disengaged or ruptured.

Therefore, the tire chains can be employed only in low-speed driving for a short distance.

Tire chains also require a considerable labor to cope with road conditions, that is, tire chains should be put on and off every time when snow or bare pavement is presented on road.

Studded tires can be used on normal roads although they have a defect that studs embedded therein cause a serious road damage, and consequently a dust pollution.

Snow tires run on both snow and normal roads, although their anti-skid effect is not comparable to that of studded tires. Particularly, their poor ice and packed snow traction results in a longer breaking distance causing safety problems.

Recently, tire chains are often substituted by rubber and resin nets adapted to be secured on tire treads. These nets induce neither violent vibration nor noise during travel on normal roads although they are inherently susceptible to be ruptured detracting from durability. For example, a passenger car having anti-skid nets of a synthetic rubber mounted on its driving wheels can travel only 50 to 80 kilometers on asphalt pavement when traveled at an average speed of 40 kilometers per hour.

### SUMMARY OF THE INVENTION

It is, therefore, an object of the present invention to provide a tread pattern formed on a tire or belted tire having high traction and thereby preventing skidding which enables a safe, comfortable drive on snow, muddy roads, packed or icy snow as well as on normal roads.

The foregoing object is accomplished by providing a tread pattern on a tire or belted tire without studs or the like.

A belted tire is a rectangular rubber belt mounted on a tire which has one of the configurations according to the present invention. A belted tire with a tread pattern in accordance with the prevent invention provides high durability and profound long-driving performance.

Another object of the present invention is to provide a novel belted tire which can be secured over a tire.

Another object of the present invention is to provide a belted tire which enables a safe, comfortable drive on normal roads as well as in adverse conditions wherein a drive with normally equipped tires is difficult, typically on snow, muddy roads, sandy soils and gravelled roads.

Still another object of the present invention is to provide a belted tire which saves labor of putting on and off an anti-skid device to cope with a change in road conditions.

Still another object of the present invention is to provide a belted tire having an improved durability.

Other objects will in part be obvious and will in part appear hereinafter.

According to one aspect of the invention, there is provided a belted tire adapted to be secured over a tire tread of a vehicle comprising

a rubber laminate of at least one rectangular rubber layer, having a tread pattern on its surface and a flexible surface on its back surface for allowing a close contact of the belted tire with said tire tread;

at least two fastening belts embedded in said rubber laminate extending substantially parallel to each other along the longitudinal axis of said belted tire;

a plurality of securing members extending substantially perpendicular to said fastening belts disposed at regular intervals along said fastening belts;

said securing member including lips at opposite ends protruding out of said rubber laminate to hold the tire on opposite sides;

a pair of coupling means for connecting opposite ends of said fastening belts and tightening said fastening belts so that said flexible surface is more closely contacted with the tire tread; and

a fastening means for pulling said lips inwardly toward the rotational axis of the tire.

According to another aspect of the invention, there is provided a belted tire adapted to be secured over a tire tread of a vehicle comprising

a rubber laminate of at least one rectangular rubber layer, having a tread pattern on its surface and flexible surface on its back surface for allowing a close contact of the belted tire with said tire tread;

at least two fastening belts embedded in said rubber laminate extending substantially parallel to each other along the longitudinal axis of said belted tire;

a plurality of securing members extending substantially perpendicular to said fastening belts disposed at regular intervals along said fastening belts;

said securing member including lips at opposite ends protruding out of said rubber laminate to hold the tire on opposite sides;

a reinforcing member;

a pair of coupling means for connecting opposite ends of said fastening belts and tightening said fastening belts so that said flexible surface is more closely contacted with the tire tread; and

a fastening means for pulling said lips inwardly toward the rotational axis of the tire.

In the present invention, the reinforcing member may preferably be a network of fibers.

The rubber laminate may preferably comprise a plurality of rubber layers, and the fastening belts and/or securing members may preferably be embedded between the rubber layers.

The tread pattern on the surface of the belted tire may preferably comprise a first zone comprising

a pair of side edge rows along axially opposed tread edges formed with a plurality of regularly spaced notches opening outwardly of the tread edges;

a pair of driving rows inside the side edge rows formed with a pattern suitable for a drive on normal roads; and

an anti-skid row at the axial center of the tread formed with a plurality of axial grooves disposed at regular intervals along the longitudinal axis of the tread for gripping road surface therewith.

The tread pattern on the surface of the belted tire may preferably further comprise a second zone disposed alternately with the first zone , said second zone including at least one axial groove extending between axially opposed tread edges.

The flexible surface may preferably be formed with a plurality of protrusions along its axially opposed edges for abutting against shoulders of the vehicle tire.

The flexible surface may preferably be formed with a means for increasing traction with the tire tread.

The securing member may preferably have at least one elongated opening extending over axially opposite edges of the rubber laminate and wherein said lips and said elongated opening of said securing member are tapered at their ends.

The securing members are not fixedly secured to said fastening belts.

The coupling means may preferably comprise a male member pivotably secured to one end of the fastening belt and a female member pivotably secured to the other end of the fastening belt;

said male member including an axially extending first shaft of rotation provided with a worm gear, and a second shaft of rotation perpendicular to the first shaft which is threaded about its circumference and provided with a gear engaging the worm gear either directly or with an intervening train of gears; and

said female member including a threaded hole for receiving the second shaft; and

wherein the fastening belt is tightened upon screwing the second shaft into the threaded hole by rotating the first shaft in a predetermined direction for rotating the second shaft, to thereby allow an approach of the male member to the female member.

The fastening means may preferably comprise a fastener to be disposed on the outer side of a vehicle wheel and a linkage to be disposed on the inner side of the vehicle wheel.

The fastener may preferably comprise

a ring member housing first and second pulleys therein via an axially extending shaft at positions along an inner circumference of the ring member corresponding to each of the lips;

sliding members having a third pulley on one end and a lip-engaging means on the other end, said third pulley being slidably mounted within the ring member for allowing a translation in radial direction of the ring member;

said first, second and third pulleys comprising a tackle corresponding to each lip; and

a cable threaded around each of the tackle to form a loop around the first, third and second pulleys, and to serially connect all of the tackles;

said fastener being effective for pulling each of the lips inwardly upon shortening the loops by tightening the cable with a take up unit mounted within the ring member.

The linkage may preferably comprise a plurality of pivotably interconnected links having a lip-engaging means formed at an end for positioning each of said lips in relation to adjacent lips.

## BRIEF DESCRIPTION OF THE DRAWINGS

FIG. 1 is a partially cutaway perspective view of a preferred embodiment of a belted tire according to the present invention.

FIG. 2 is a partial plan view of a tread configuration of the belted tire according to a preferred embodiment of the present invention.

FIG. 3 is a partial plan view of a flexible surface of the belted tire according to a preferred embodiment of the present invention.

FIG. 4 is a transverse cross-section of the belted tire according to the present invention.

FIG. 5 is a plan view of a securing member in unfolded state.

FIG. 6 is a side view of the securing member.

FIG. 7 is a plan view of a coupling means.

FIG. 8 is side view of the coupling means.

FIG. 9 is a partially cutaway view of a fastener.

FIG. 10 is a partial cross-section taken along lines X-X of FIG. 9.

FIG. 11 is a plan view of a linkage.

FIG. 12 is a side view of a linkage.

FIG. 13 is a partial side view of an exemplary lip-connecting means on the inner side of a wheel.

FIGS. 14, 15, 16, and 17 illustrate an attachment of the belted tire onto a vehicle tire.

FIG. 18 is a plan view of a preferred embodiment of a tread pattern formed on a tire according to the present invention.

FIG. 19 is a cross-section taken along lines II-II of the tread pattern of FIG. 18.

FIG. 20, 21, 22, 23 and 24 are plan views of tread patterns according to the present invention.

FIG. 25, 26, 27, 28 and 29 are enlarged transverse cross-section showing the shape of the protrusion according to the present invention.

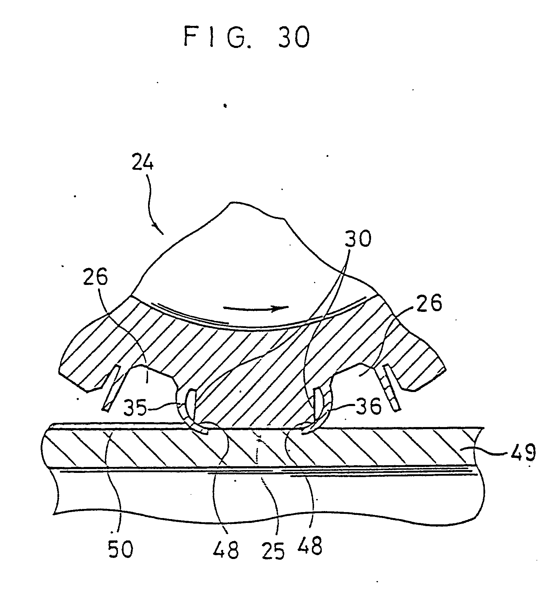

FIG. 30 is a partial transverse cross-section showing the a tire with a tread pattern according to the present invention in contact with an icy road.

FIG. 31 is a partial plan view of a preferred embodiment of the second configuration of the belted tire according to the present invention.

FIG. 32 is a cross-section showing the ridge.

FIG. 33 is a cross-section showing the ridge and the resilient ridge.

FIG. 34 is a partial cross-section showing the flexible surface of the belted tire of the second configuration.

FIG. 35 is an exploded view showing the innner structure of the rubber laminate of the belted tire according to the second configuration.

FIG. 36 is a cross-section showing the configuration the edge of the rubber laminate of a belted tire according to the second configuration.

FIG. 37 is a exemplary diagram showing the reinforcing member which also functions as a fastening means on both side of the laminate layers of the belted tire of the second configuration.

FIG. 38 is a cross-section showing the fastening means fastening the both side of the laminate layer.

FIG. 39 is a cross-section showing lips connected by the coupling means.

## DETAILED DESCRIPTION OF THE INVENTION

The present invention is described in detail referring to preferred embodiments illustrated in drawings.

Unless otherwise indicated, the term "axial" and "axially" refer to a direction parallel to the rotational axis of a tire.

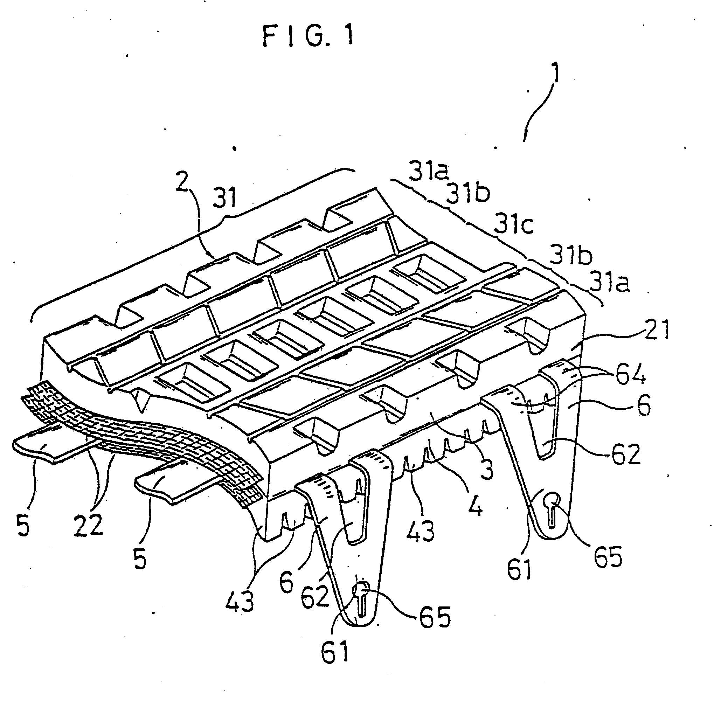

FIG. 1 is a partially cutaway perspective view of a preferred embodiment of the belted tire 1 comprising a rubber laminate 2 including a first rectangular rubber layer 3 defining the outer surface and a second rectangular rubber layer 4 defining the back surface.

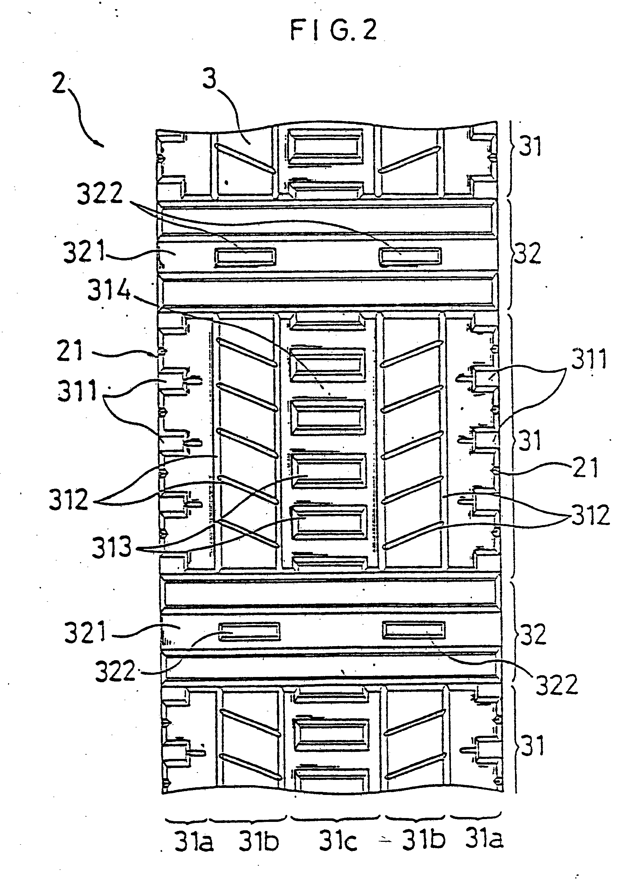

A tread pattern or configuraion is formed on the first rubber layer 3, that is, on the rubber laminate 2. A preferred tread configuration is illustrated in FIG. 2.

As shown in FIG. 2, the tread pattern on the first rubber layer 3 comprise a first zone 31 and a second zone 32 alternately disposed along the longitudinal or circumferential axis of the rubber laminate 2.

The first zone 31 comprise a pair of side edge rows 31a along axially opposed tread edges, a pair of driving rows 31b inside the side edge rows 31a, and an anti-skid row 31c at the axial center of the tread.

The side edge rows 31a are formed with a plurality of notches 311 opening outwardly of the axially opposed side edges 21 of the rubber laminate 2. The notches 311 are disposed at regular intervals along the longitudinal axis of the rubber laminate and chiefly function to prevent axial skidding of the tire.

The driving rows 31b perform a driving function on normal roads and are typically patterned for normal driving conditions. In an exemplary embodiment illustrated in FIG. 2, the driving rows 31b are provided with a combination of grooves 312 comprising a pair of circumferentially extending parallel grooves and uniformly spaced apart diagonal grooves running between the circumferentially extending grooves. Such a configuration ensures a stable drive on both dry and wet roads.

The anti-skid row 31c is formed with a plurality of uniformly circumferentially spaced apart lateral grooves 313. The grooves 313 are relief elements into which snow, dirt and sand are taken in so that the road-engaging surface of the belted tire 1 contacts the road directly. This configuration improves gripping properties of the belted tire 1 to provide a better traction upon acceleration and prevents from skidding upon deceleration, breaking and cornering, enabling a safe drive.

In the anti-skid row 31c, the lateral grooves 313 are defined within a ladder-like rib 314 which is independent of the adjacent driving rows 31b. The ladder-like rib 314 sufficiently strengthens the anti-skid row 31c to prevent the belted tire 1 from being ruptured at the anti-skid row 31c even after driving a long-distance on normal roads.

Bottom edges of the notch 311 and the lateral groove 313 may be provided with a taper to aid an instantaneous evacuation of snow and the like taken therein.

The second zone 32 is formed with a lateral groove 321 extending between and opening outwardly of the axially opposed side edges 21 of the rubber laminate 2. Even if the first zone 31 should allow circumferential slipping of the tire, the second zone 32 may stop the slipping.

For example, upon acceleration on snow, traction is likely to be reduced to cause circumferential slipping of the tire at the first zone 31. The groove 321 in the second zone 32 axially extending throughout its width may then pool snow on the road-engaging surface of the tire to regain the snow traction and stop the slipping.

The groove 321 functions as an edge to exert traction and braking force particularly on deep snow or packed ice when the tread of the belted tire does not contact the pavement.

As shown in FIG. 2, a pair of lateral ridges 322 may preferably be provided in the groove 321 at positions axially corresponding to the driving rows 31b. The provision of the lateral ridges 322 facilitates a more stable drive at lower noise level on normal pavement since the ridges 322 fill gaps defined between the driving rows 31b of the adjacent first zones 31.

Apart from the embodiment illustrated in FIG. 2, two or more grooves 321 may be provided in one second zone 32. Configuration of the groove 321 as well as the ridge 322 are not particularly limited to the one illustrated in FIG. 2.

Although the alternate first and second zones 31 and 32 are disposed alternately along the longitudinal axis of the laminate 2 in the embodiment of FIG. 2, it will be appreciated that the tread may solely comprise the first zone 31 throughout its length without providing the second zone 32. It is clearly understood that the tread configuration is not limited to those described above.

The second rubber layer 4 on the back of the rubber laminate 2 has flexible surface 41 to facilitate a close contact of the belted tire 1 with the tread 171 of the tire 17. The flexible surface 41 may preferably be either provided with, for example, a longitudinal groove 42 and/or projections (not shown) or surface-roughened to increase a friction between the flexible surface 41 and the tire tread 171. The thus provided closer contact between the flexible surface 41 and the tire tread 171 avoids displacement of the belted tire 1 on the vehicle tire 17 since the flexible surface 41 is likely to follow the contour of the vehicle tire 17 even if the tire is deformed during operation.

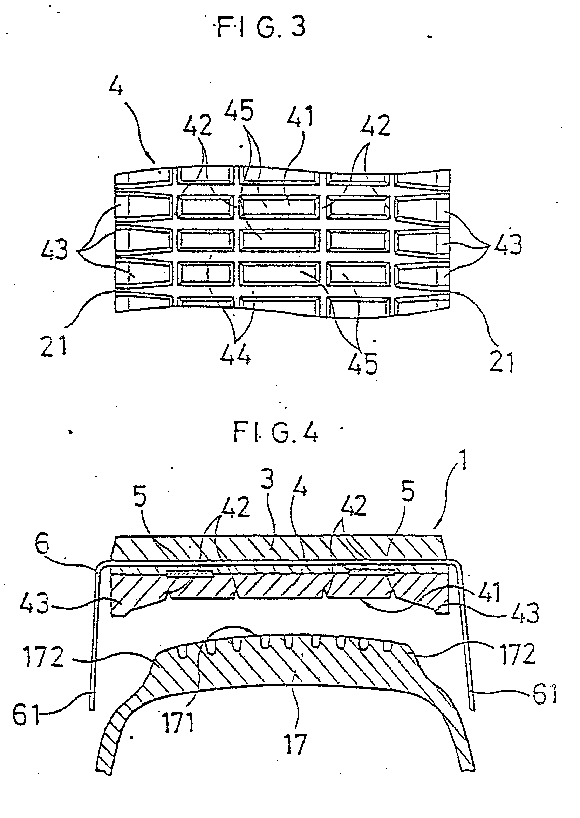

For example, referring to FIG. 3, there is illustrated a preferred configuration of the flexible surface 41 wherein a plurality of lateral grooves 44 axially extending between and through the opposed edges 21 of the rubber laminate 2. The lateral groove 44 temporarily accomodates foreign matters such as muddy water and sand, and aids their evacuation from opposite ends 21 in case they should enter between the flexible surface 41 and the tire tread 171. Since no foreign matter is present between a tire-engaging portions 45 in the flexible surface 41 defined by grooves 42 and 44 and the tire tread 171, a close contact is retained therebetween to avoid displacement of the belted tire.

The longitudinal and lateral grooves 42 and 44 also function to dissipate heat generated by the friction between the flexible surface 41 and the tire tread 171. The flexible surface 41 may be formed with a plurality of protrusions 43 along its axially opposed edges for abutting against shoulders 172 of the vehicle tire 17. When the belted tire 1 is mounted on the tire 17, the protrusions 43 become engaged with the shoulders 172 of the tire 17 preventing an axial displacement of the belted tire 1 during usage.

Although the rubber laminate 2 is set forth as being comprised on the first rubber layer 1 and the second rubber layer 4, it will be appreciated that the rubber laminate may comprise either a single layer or three or more layers.

The rubber layers constituting the rubber laminate 2, which are the first and second rubber laminates 3 and 4 in the embodiment illustrated in FIG. 1, may be prepared from any rubber material. Non-limiting examples of the rubber material include natural rubber (NR), diene rubber such as isoprene rubber (IR), styrene-butadiene rubber (SBR), butadiene rubber (BR), chloroprene rubber (CR), acrilonitrile-butadiene rubber (NBR, NIR, NBIR), non-diene rubber such as butyl rubber (IIR), urethane rubber (U), and a mixture thereof.

The rubber material may further include an additive such as curing agent, curing accelerater or its aid, curing retarder, scorch retarder, aging retarder, antioxidant, filler such as carbon black, reinforcing agent, softener, plasticizer, tackifier, hardener, dispersant, and processing aid.

The rubber material constituting the rubber laminate 3 is appropriately selected to meet the end use and required functions. For example, a material having a good wear resistance, cold-temperature resistance and elasticity is selected for the first rubber layer 3, and a material capable of facilitating a close contact with the tread 171 of the vehicle tire 17 is selected for the second rubber layer 4.

The first and second rubber layers 3 and 4 may preferably comprise rubber materials which exhibit analogous properties and whose functions are unlikely to be degraded to exhibit hardening or deterioration at low and high temparatures.

The rubber laminate should also have strength and durability for various stresses applied on the belted tire during its operation. The rubber materials must be selected by taking all these factors into account.

Total thickness of the rubber laminate 2 may vary from about 1.5 to about 3.0 cm when the rubber laminate comprises a typical tire material such as styrene-butadiene rubber (SBR). A thickness less than 1.5 cm results in a reduced stability upon curing/molding the laminate 2 with the members 5, 6 and 22 embedded therebetween, and in an insufficient depth of the grooves and notches defined in the tread of the belted tire 1 detracting from anti-skid properties. A thickness exceeding 3 cm results in an increased substantial diameter of the vehicle tire 17, and consequently in a larger error of speedometer and odometer, although a total strength of the rubber laminate 2 may increase.

As shown in FIGS. 1 and 4, fastening belts 5 and securing members 6 are embedded in the rubber laminate 2.

At least two fastening belts 5 are circumferentially embedded in the rubber layer 2 substantially parallel to each other. The fastening belts 5 are employed to fixedly secure the belted tire 1 over the entire circumference of the tread 171 of the vehicle tire 17. Two or more fastening belts 5 are thus required. If there is only one fastening belt, the belted tire 1 is likely to be displaced during a deformation of the tread 171 of the rotating tire 17 when the fastening belt is instantaneously loosened. Two or more fastening belts may avoid such displacement of the belted tire 1 since at least one fastening belt remains tightened until the other belt is retightened after being loosened by the deformation of the tire tread 171.

The fastening belt 5 may be prepared from any material capable of enduring tension applied thereto. Non-limiting examples of the material include a strip of metal such as steel and stainless steel, a ceramics strip, and a resin-treated or impregnated bundle of knitted or unknitted synthetic fibers such as ceramics, nylon, Tefron and Kevler.

A plurality of securing members 6 are embedded in the rubber laminate 2. The securing members 6 extend substantially perpendicular to the fastening belts 5, and are disposed at regular intervals along said fastening belts 5. The securing members 6 axially tighten and stabilize the belted tire 1 over the entire circumference of the tread 171 of the tire 17.

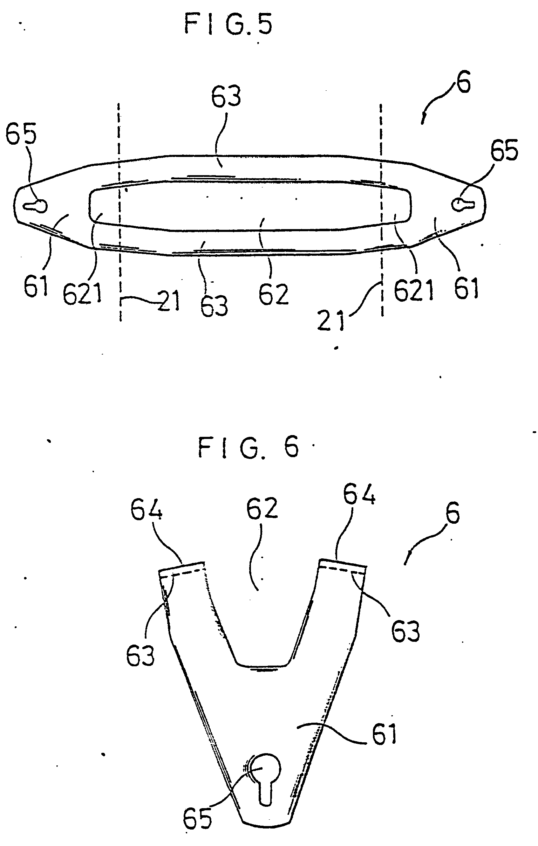

A preferred embodiment of the securing member 6 is illustrated in FIG. 5. It is to be noted that the securing member 6 is illustrated in its developed state with lips unfolded for ease of understanding.

The securing member 6 is a boat-shaped thin plate having an elongated opening 62 extending lengthwise and lips 61 on opposite ends as shown in FIG. 5. The elongated opening 62 provided in the securing member 6 increases integrity of the securing member 6 with the rubber laminate 2 to prevent the securing member 6 from peeling off in the laminate 2 by the stress applied during operation.

Two broken lines in FIG. 5 indicate the axial opposite ends 21 of the rubber laminate 2. The lips 61 protruding out of the edges 21 of the rubber laminate 2 are bent toward the vehicle tire 17 so that the lips 61 may be engaged on the opposed sides of the vehicle tire. Opposite end portions 621 of the elongated opening 62 are located beyond the opposite ends 21 of the rubber laminate 2.

The lip 61 is pulled toward the center of the vehicle tire 17 by a fastening member comprising a fastener 10 and a linkage 16 as set forth hereinafter. The lip 61 is formed with a mating means such as a key slot 65 for engaging with an appropriate member of the fastening member.

The lips 61 and the end portions 621 of the elongated opening 62 are tapered. Upon bending the lip 61, bent portions 64 and beams 63 defining the elongated opening 62 are deformed to closely fit along the arc or circumference of the tire 17. A closer contact between the flexible surface 41 and the tire tread 171 is thus facilitated upon pulling the lips 61 toward the center of the tire 17.

It is to be noted that the securing member 6 is not limited to the above-specified configuration, and other configurations with no opening 62 or with two or more openings may be used as well.

The securing member 6 may be formed from a metal such as steel and stainless steel or a plate of ceramics, among which a highly corrosion resistant material such as stainless steel or a corrosion-preventive plated steel being preferred.

Although the fastening belts 5 and the securing members 6 are both embedded in the rubber laminate 2, they are preferably not fixedly secured to each other. Since the fastening belts 5 and the securing members 6 are disposed perpendicular to each other and tightened in different directions, that is, circumferential and radially inward directions, different forces are applied on them during rotation resulting in their independent movements. If the securing members 6 are fixedly secured to the fastening belts 5, various tensions are likely to be concentrated at and near their junctions to cause a crack or rupture of the belted tire 1.

When the rubber laminate 2 comprises two or more rubber layers, the fastening belts 5 and/or the securing members 6 may preferably be interposed between the rubber layers for an ease of manufacture. The belted tire 1 of the present invention is prepared by subjecting the first rubber layer 3 to a pressure on a mold of a pressing machine and compression molding in the mold to provide the tread with a pattern, and then overlying other rubber layers in a predetermined order and subjecting these layers to a pressure by the pressing machine to vulcanize and shape these layers into the rubber laminate 2. The fastening belts 5 and the securing members 6 are sandwiched between the rubber layers during the above-described process.

Circumferential and axial tensile stresses are exerted on the rubber laminate 2 of the belted tire 1 during usage on vehicle tire 17. Large complicated stresses are applied onto the rubber layer 2 particularly upon braking, cornering, driving on rough roads, and high speed driving. There arises a danger of tearing rupturing of the belted tire 1 which is exaggerated by deterioration of the rubber laminate 2. It is, therefore, preferred to embed a reinforcing member 21 for increasing an entire strength of the rubber laminate 2.

The reinforcing member 21 may preferably comprise a network due to its relatively light weight, high strength, large surface area, and excellent adhesion to the rubber layer. Illustrative networks utilized for the reinforcing member 21 include woven or unwoven fabrics and nets of fibrous metal and resin such as nylon, Kevler, ceramics; punched metal; resin screen and the like. A reinforcing member 21 having a large mesh as illustrated in FIG. 1 is preferable since the rubber can get into the mesh allowing an increased integrity of the reinforcing member with the rubber layers sandwiching the reinforcing member therebetween. The large meshed reinforcing member 21 may also facilitate mutual fusing of the rubber layers during the vulcanization/shaping of the rubber laminate 2 to increase the integrity of the rubber layers. The type and configuration of the reinforcing member 21 are not limited to the above mentioned ones so long as it is effective for reinforcing the rubber laminate 2. For a convenience of production, the reinforcing member may preferably be interposed between the rubber layers, as set forth above for fastening belts 5 and securing members 6.

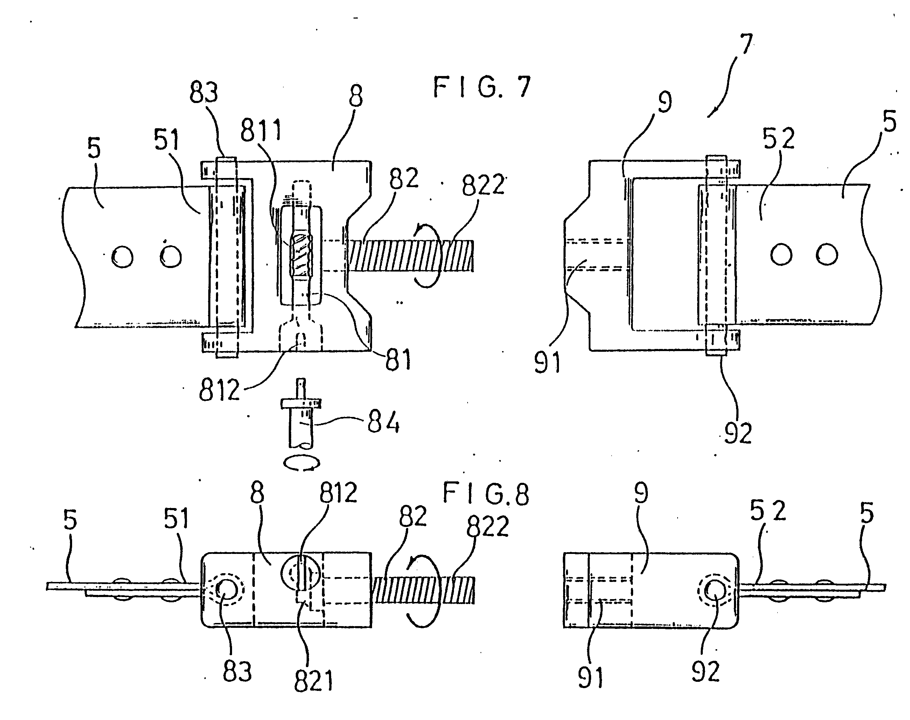

Upon fitting the belted tire 1 around the vehicle tire 17, opposite ends of the fastening belts are coupled by a set of coupling means 7. FIGS. 7 and 8 demonstrate an embodiment of the coupling means comprising a male member 8 pivotably secured to one end 51 of the fastening belt 5 with a pin 83, and a female member 9 pivotably secured to the other end 52 of the fastening belt 5 with a pin 92. The opposite end portions 51 and 52 of the fastening belt 5 are folded back on themselves around pins 83 and 92 respectively, and bonded by means of spot welding and the like. Optional reinforcing members (not shown) may be provided around the pins 83 and 92 for avoiding the belt 5 from being ruptured by wear.

The male member 8 includes an axially extending first shaft of rotation 81 provided with a worm gear 811 at about center of the first shaft 81. A recess 812 is formed at one end of the first shaft 81 for receiving an appropriate tool 84 for turning the first shaft 81. The tool may resemble a screwdriver in shape having a handle grip and a shaft of several ten centimeters. The recess 812 may have a straight, cross, square or hexagonal configuration.

The male member 8 is further provided with a second shaft of rotation 82 extending perpendicular to the first shaft or along the longitudinal axis of the fastening belt 5. The second shaft 82 is provided at one end with a gear 821 engaging the worm gear 811. The gear 821 may engage the worm gear 811 either directly or with an intervening train of change gears (not shown). The second shaft 82 includes a threaded portion 822 protruding out of the male member 8.

On the other hand, the female member 9 is formed with a threaded hole 91 for receiving the threaded portion 822 of the second shaft 82. The threads formed inside the threaded hole 91 correspond to the threads 822 formed on the second shaft 82.

Turning now to a description of coupling and tightening operation utilizing the coupling means 7, the tool 84 is inserted into the recess 812 and turned in a predetermined direction to rotate the first shaft 81 and consequently the second shaft 82. In the meantime, the threaded end of the second shaft 82 is mated with the threaded hole 91. The second shaft 82 screws into the threaded hole 91 allowing the male and female members 8 and 9 to approach to thereby tighten the fastening belt 5. Degree of fastening is controlled by a distance between the male and female members 8 and 9.

When the tool 84 is removed from the recess 812, a mechanism including the worm gear 811 avoids the loosening of the fastening belt 5 maintaining the relative position of the male and female members 8 and 9 as it was.

Such a coupling means 7 may preferably be provided independently for each fastening belt 5 as illustrated in FIGS. 7 and 8 so that each fastening belt 5 is provided with the male and female members 8 and 9 at its opposite ends. The degree of fastening in each fastening belt can then be independently adjusted, and even if one fastening belt is loothened, other belts are not effected by that.

A plurality of fastening belt 5 may also be fastened at once by one coupling means comprising a pair of male and female members 8 and 9 for purpose of simplifying the arrangement.

A protective cover (not shown) may optionally be provided on the coupling means 7 for preventing foreign matters such as dirt, sand, gravel and dust from getting into the engagement between the worm gear 811 and gear 821, or threaded portion 822 of the second shaft of rotation 82.

The coupling means 7 is not limited to the above-described one so long as it couples opposite ends of the fastening belt 5 in a tightened state upon fitting the belted tire 1 around the vehicle tire 17 to facilitate a close contact between the flexible surface 41 and the tread 171 of the tire 17.

The belted tire 1 is securely mounted around the vehicle tire 17 with a fastening means which pulls the lips 61 inwardly toward the rotational axis of the tire.

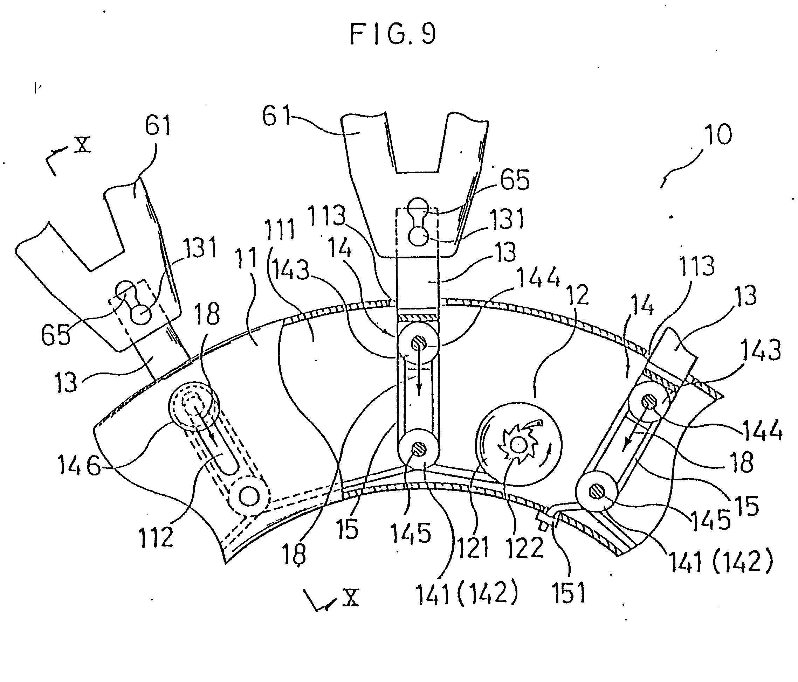

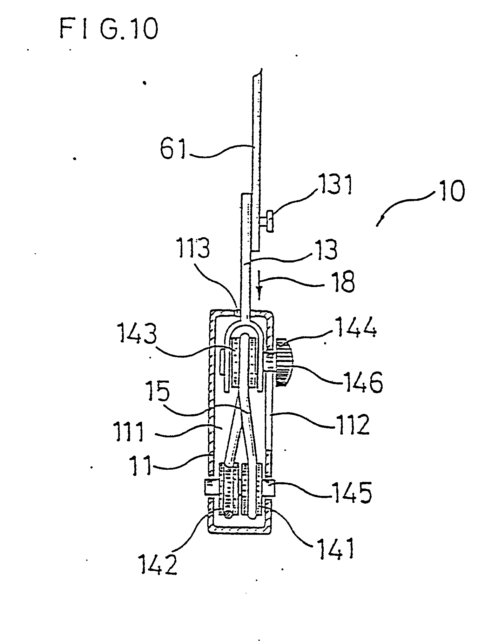

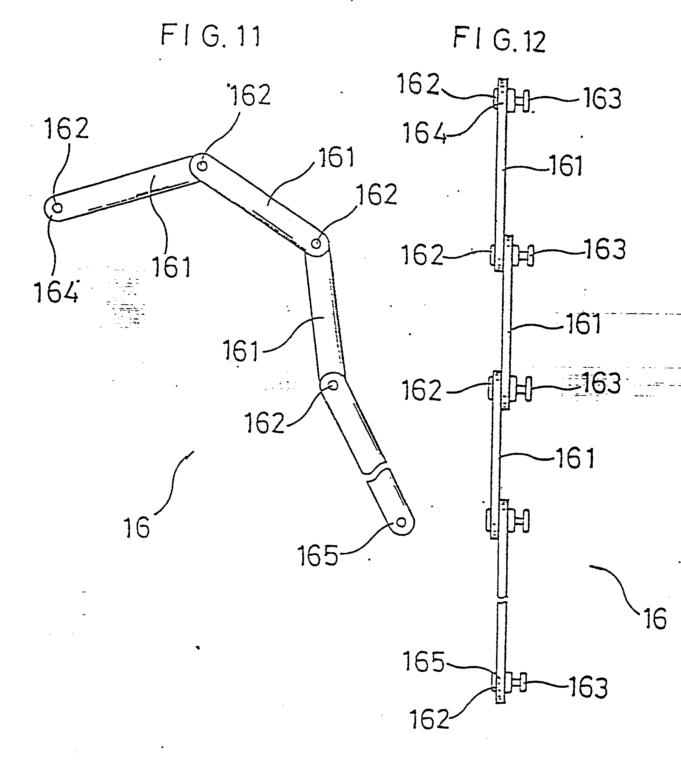

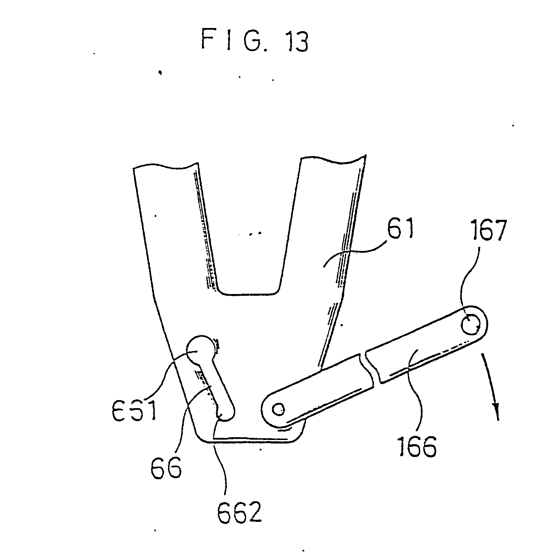

The fastening means comprise a fastener 10 to be disposed on the outer side of a vehicle wheel which is partially illustrated in FIGS. 9 and 10 and a linkage 16 to be disposed on the inner side of the vehicle wheel demonstrated in FIGS. 11 and 13.

Referring to FIGS. 9 and 10, there are illustrated the fastener 10 which has a ring member 11 defining an interior space 111 for housing tackles 14, a take up unit 14, and the like therein.

The ring member 11 houses in its interior space 111 coaxial first and second pulleys 141 and 142 via an axially extending shaft 145 at positions corresponding to each of the lips 61 along an inner circumference of the ring member 11.

The ring member 11 is formed with radially extending elongated slots 112 on its outer side at positions corresponding to each of the lips 61. A shaft 144 supporting a third pulley 143 thereon extends through the elongated slot 112 serving as a guide member for a radially sliding member 13.

The sliding member 13 are slidably mounted within said ring member 11 at positions corresponding to each of the lips 61, and extend through slots 113 formed on radially outer circumference of the ring member 11. The sliding member 13 is provided with the third pulley 143 via the shaft 114. A catch or protrusion 131 is formed on the other end of the sliding member 13 for mating through the slot 65 formed on the tip portion of the lip 61.

A handle 146 mounted on one end of the shaft 144 is located on the axially outer surface of the ring member. The handle 146 is used for engaging the catch 131 through the slot 65. Since the sliding member 13 is pulled inwardly into the ring member 11, the sliding member 13 must be pulled out by means of the handle 146 before the sliding member 13 can be engaged with the lip 61.

In this arrangement, the first, the second and third pulleys 141, 142, and 143 constitute a tackle 14 which correspond to each of the lips 61. A cable 15 is threaded around the tackle 14 to form a loop around the first, third and second pulleys 141, 143 and 142. The cable 15 serially connects all of the tackles 14.

In the tackle 14, the cable 15 may also be threaded around the pulleys in different order from the above-specified order. Although three pulleys are shown in FIG. 10, number of the pulleys is not limited thereto. Tackles of different arrangement may also be employed in one fastener.

As demonstrated in FIG. 9, one end of the cable 15 serially threaded around the tackles 14 is fixedly secured to the ring member 11 by means of a stopper 151 or the like. The other end of the cable 15 is wound by a take up unit 12 mounted at an appropriate position within the interior space 111 of the ring member 11.

The take up unit 12 comprise a take up spool 121 mounted in the ring member 11 via a shaft which is capable of winding a sufficient length of the cable 15, and a ratchet/pawl assembly 122 for preventing reverse rotation of the take up spool 121.

Upon counterclockwise rotation (FIG. 9) of the take up spool 121, the cable 15 is wound by the take up spool 121 and the loop around the tackle 14 is tightened. The sliding member 13 is then translated inwardly toward the center of the vehicle tire 17 as indicated by arrow 18 pulling the lips 61 in the same direction.

Referring to FIGS. 11 and 12, there are illustrated the linkage 16 to be disposed on the inner side of the vehicle wheel. The linkage 16 comprise a plurality of links 161. Number of the links 161 corresponds to that of the lips 61. The links 161 are pivotably coupled at their ends in a serial arrangement by means of pins 162. The pins 162 are also provided at opposite ends 164 and 165 of the linkage 16.

As shown in FIG. 12, the pin 162 is provided at its head with a catch or protrusion 163 to mate through the slot 65 formed at the tip portion of the lip 61.

The linkage 16 is mounted on the inner side of the vehicle tire 17 by sequencially mating the catch 163 through the corresponding slot 65 of the lip 61 from the starting end 164 to the finishing end 165. Adjacent catches or protrusions 163 are spaced at a distance equal to or slightly shorter than the distance between the slots 65 of the adjacent lips 61 of the mounted belted tire 1 over the vehicle tire 17. With the thus arranged linkage 16, the lips 61 are positioned properly in relation to the adjacent lips 61 on the inner side of the vehicle tire 17.

FIG. 13 is a partial side view illustrating an alternative embodiment for the linkage 16. In this embodiment, an arm 166 is pivotably attached to the tip of the lip 61. A key slot 66 including a predetermined angle between the longitudinal axis of the lip 61 is formed beside one end of the arm 166 at the tip of the lip 61. A catch or protrusion 167 is provided at the other end of the arm 166. The catch 167 is inserted into a head portion 661 of the key slot 66, and the arm is then turned in direction indicated by an arrow. The catch 167 slides downward along the slot 66 until it reaches a bottom portion 662 of the key slot 66 to complete the fitting of the catch 167 through the key slot 66.

By carrying out this fitting process for each lips 61, all of the lips 61 are interconnected by the arms 166 and positioned properly on the inner side of the vehicle tire 17.

A detailed description of a embodiment of a tread pattern of a tire or belted tire according the present invention is set forth hereinafter referring to the drawings.

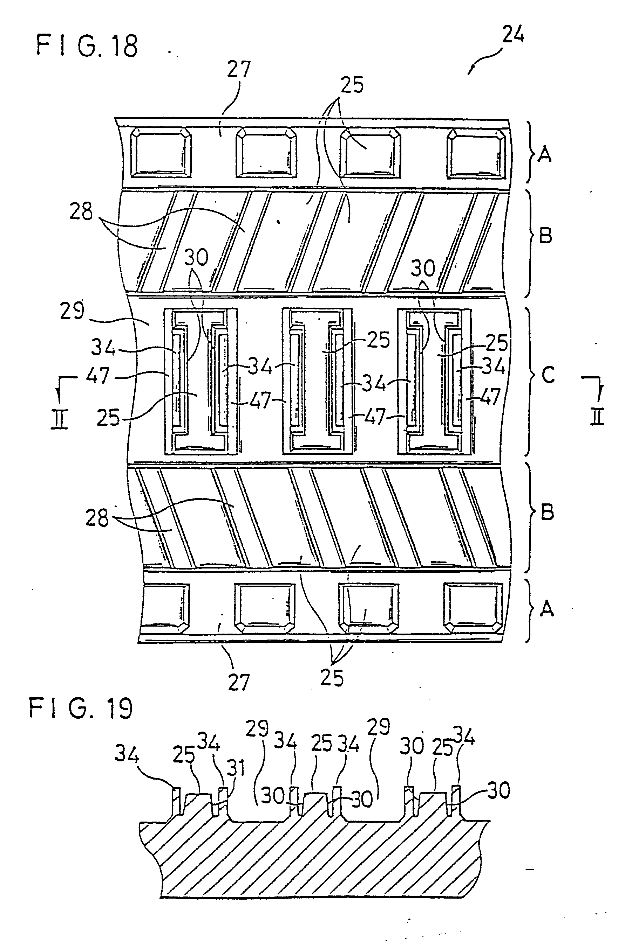

FIG. 18 is a plan view showing the preferable embodiment of a tread pattern.

FIG. 19 is a cross-section taken along lines II-II of FIG. 18.

As shown in FIGS. 18 and 19, the surface of the tire 24 comprises a pair of side edge rows A, A along axially opposed tread edges and a pair of driving rows B, B inside the side edge rows and an anti-skid row C at the axial center of the tread.

Each row has grooves recessed from the surface of the tread 25 which contacts the road directly.

The grooves are suitably formed corresponding to the function of the row as set forth hereinafter.

The side edge rows A, A are formed with a plurality of regularly spaced notches 27 opening outwardly of the tread edges. The notches 27 chiefly function to prevent axial skidding of the tire 24.

The driving rows B, B perform a driving function on normal roads and are typically patterned for normal driving conditions. In an exemplary embodiment illustrated in FIG. 18.

The driving rows B, B are provided with grooves 28 comprising declined grooves uniformly spaced apart running circumferentially along the tire 24. Such a configuration ensures a stable drive on both dry and wet roads.

In the anti-skid row C, ladder-like recess 29 are formed with comparatively large area. The recess 29 serve to take in snow, dirt and sand, and thus prevent these stuffs from intervening between the road surface and the tread 25. This configuration improves gripping properties of the tread to provide a better traction upon acceleration and prevents skidding upon deceleration, braking and cornering.

In the recess 29, protrusions 34, 34 are provided neighboring the inside wall 30, 30 of the tread 25 running circumferencially along the tire 24. The protrusion 34 is formed simultaneously with the recess of the tire 24 from the same rubber material. And the resilience allows the protrusions to bend freely.

As shown in FIG. 18, the protrusion 34 may preferably be plate-shaped extending along the inside walls of the recess 29.

Apart from the tread pattern shown in FIG. 18, a recessed area opening outwardly of the tread edges may be formed in the tread 25 with plate-shaped protrusions neighboring the inside walls of the recessed area.

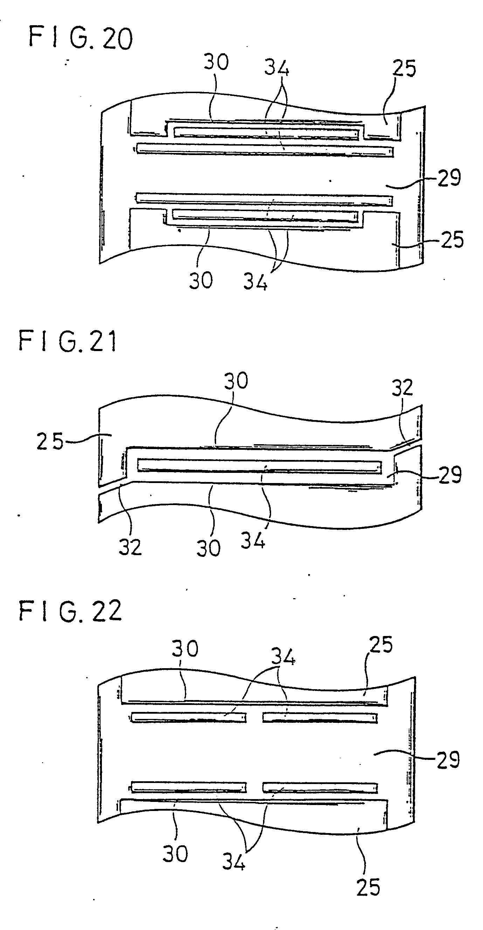

Various patterns or shapes are available to form the protrusion other than the one shown in FIGS. 18 and 19. Typical patterns to form the protrusion 34 are hereinafter set forth according to FIGS. 20 to 24 .

The example shown in FIG. 20 illustrates two plate- shaped protrusions 34, 34 with different heights both neighboring an inside wall 30.

The example shown in FIG. 21 illustrates a protrusion 34 formed about the center of the recess 29. In this case drains 33, 33 are formed to aid instantaneous evacuation of water and the like in the recess 29.

The example shown in FIG. 22 illustrates a protrusion divided into a plurality of aligned protrusions neighboring an inside wall 30.

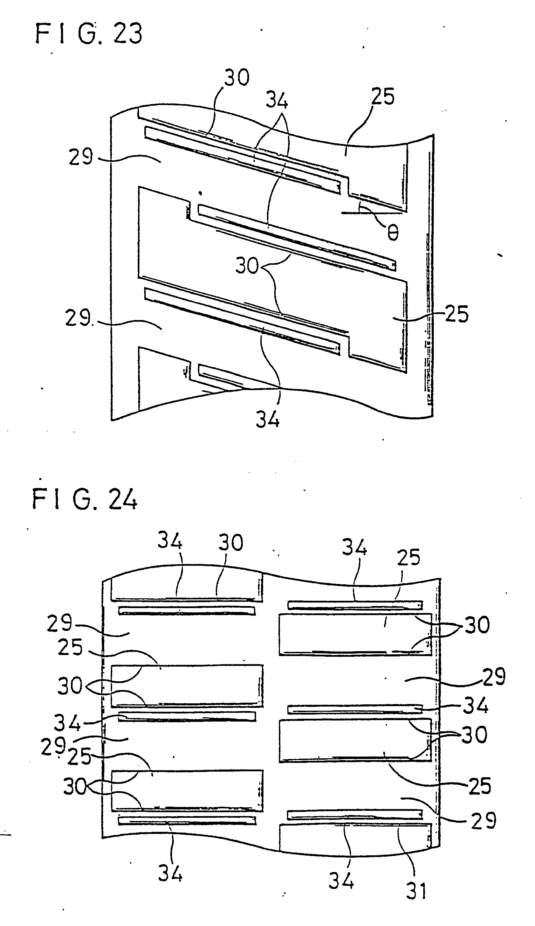

In the example shown in FIG. 23, the recess 29 extends with an angle θ to the axis and the protrusions 34, 34 are formed parallel to the inside wall 30, 30.

In the example shown in FIG. 24, a pair of circumferentially extending parallel recess 29 are formed. In each of the left recess 29, only one side of the inner wall 30 has neighboring plate-shaped protrusion 34. In each of the right recess 29, the side opposite to the above-mentioned inner wall 30 has neighboring plate-shaped protrusion 34. The protrusion may be formed only at one side of the inner wall 30, 30.

Moreover, it is not necessary that all the recessed area has a protrusion.

The tip of the protrusion 34, as shown in FIG. 19, protrudes a predetermined length above the surface level of the tread 25. Upon braking, the tip of the protrusion bends toward the tread 25 and contacts with the road prior to the tread 25, wedging into the space between the tread 25 and the road. This configuration, therefore, exerts resistance or friction between the tread and the road surface to provide greater braking force.

Apart from the example shown in FIG. 19, the shape of the protrusion 34 may be formed as following.

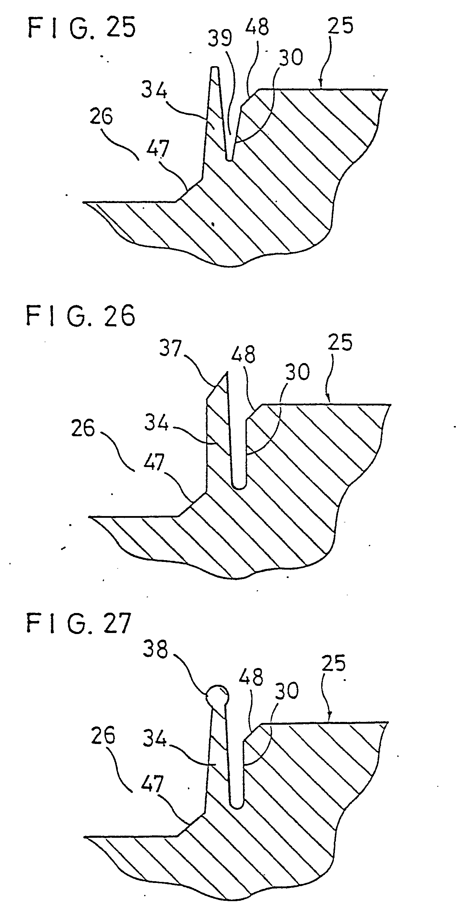

As shown in FIG. 25, the protrusion 34 is tapered to provide a swift bending of the tip of the protrusion 34. In this case, a notch 39 is formed between the protrusion 34 and the inner wall 30. As shown in FIG. 26, the tip of the protrusion 34 has an edge 37 declining inwardly to the recessed area 26 to aid the tip of the protrusion 34 in wedging into the gap between the road and the tread 25. In stead of the tapered part, a step may be formed at the tip of protrusion 34 to provide the same effect.

As shown in FIG. 27, a rounded head 38 may be formed at the tip of the protrusion 34. The rod-shaped head 38 produce an anti-skid effect upon braking by sticking into the road surface (ice layer 49) as the tip of the protrusion 34 wedges into the gap between the road and the tread 25.

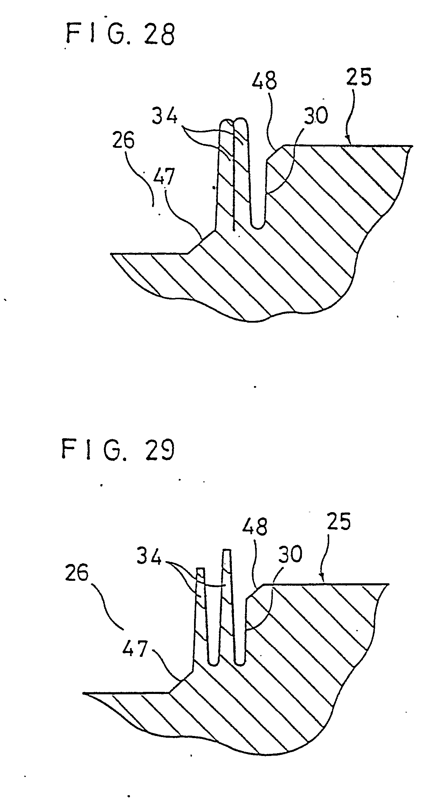

As shown in FIG. 28, two or more protrusions 34 may be formed adjoing each other. By this configuration, rupture by a shock of an emergency braking is avoided. Additionally, gravel, trash, and the like can be evacuated instantaneously. And an anti-skid effect is heightened on a road covered with wet snow.

As shown in FIG. 29, more than two protrusions 34 with different height may be formed apart from each other neighboring the inner wall 30. The heavy vehicle causes greater distorsion of the tire and the protrusion formed on the tread of the tire intrudes deeper into the tread. The configuration shown in FIG. 29 prevents detracting from anti-skid property otherwise being caused by the falling down of the protrusions of the same height one upon another.

As shown in FIGS. 25 to 29, bottom edges of the recessed area 26 may be provided with a taper 47 to aid an instantaneous evacuation of snow and the like taken therein. Moreover, the shoulder of the inner wall 30 has a taper 48 to aid the tip of the protrusion 34 in wedging into the gap between the road and the tread 25 when the protrusion falls toward the inner wall 30 upon braking or starting.

A round may be substituted for the taper 47, 48.

According to one aspect of the invention, the patterns of the protrusions shown in FIGS. 20 to 24 may be combined with various shape or other properites of the protrusions.

It is noted that the shape, configuration of the recessed area and the shape, configuration of the protrusion 34 are not limited to those above mentioned.

The tread pattern according to the present invention may be applied to automobiles such as passenger cars, truck and race cars such as rally cars, special cars such as automobiles for constuction use and to a belted tire (for example, a belted tire disclosed in Japanese Patent 62-16918) secured on the tires of the vehicles.

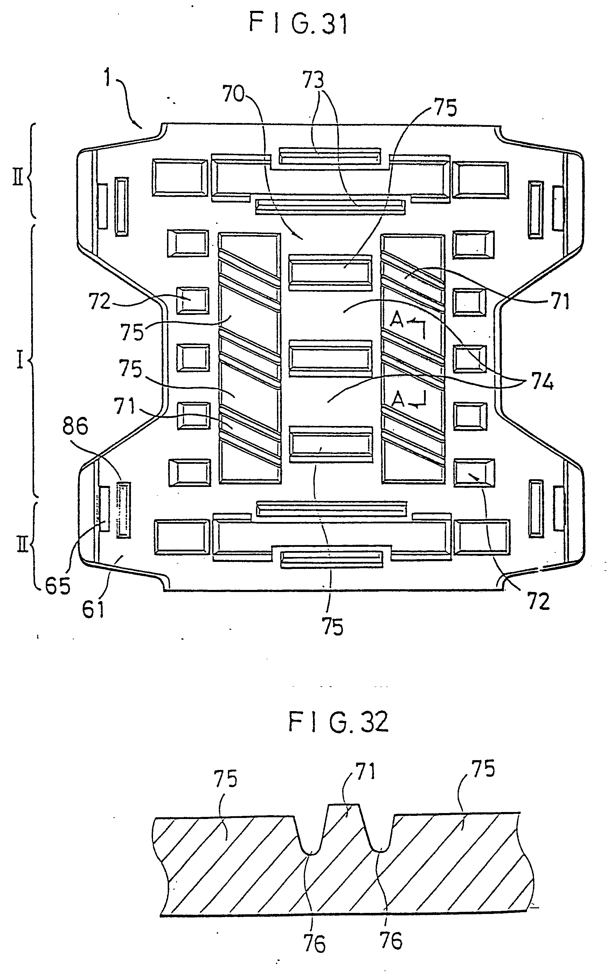

A tire and belted tire according to one aspect of the present invention is hereinafter set forth referring to FIG. 31.

FIG. 31 illustrates an example of a belted tire featuring a unit of the tread pattern.

This unit comprises a first zone I and a second zone II. The tread pattern in the second zone comprises a protrusion(s) 34 as previously set forth. The tread pattern in the first zone is hereinafter set forth.

The first zone comprises a anti-skid row 70, ridges 71, and driving row 72 used for tires in general. The tread pattern shown in FIG. 31 has its feature in the combination of a second zone comprising protrusions 34 (resilient ridge 73 hereinafter) and a first zone comprising ridges 71.

The function of the second zone is as above set forth. The anti-skid row 70 in the first zone I is described hereinafter.

The anti-skid row 70 prevents axial skidding of the tire (hereinafter denoted as "tire" including belted tire).

The tread evacuates snow which is taken into the tread to opposed sides of the tire as the tire runs on the road covered with snow. When the tire rotates at high speed, the tread contacts the road prior to the evacuation of the snow and the tire runs on the snow left unevacuated. This causes skidding on the layer of snow between the road and the tire. In order to avoid this phenomenon, an anti-skid row at the axial center of the tread is formed to take in snow into the central cavity and stabilize the tread surface of the tire.

The anti-skid row 70 according to the present invention is provided with many cavities 74 to stabilize the tread surface by retaining snow therein. In the case only relatively large cavity 74 is formed in the center of the tire, it will cause bending of the tire surface. Therefore, typical tread 75 may preferably spaced in the anti-skid row 70 at a comparatively long distance. The shape of the tread may be a rectangle shown in FIG. 31, a circle, a diamond, or any sort.

Next, the ridge 71 provided at both ends of the above-mentioned anti-skid row 70 is set forth hereinafter.

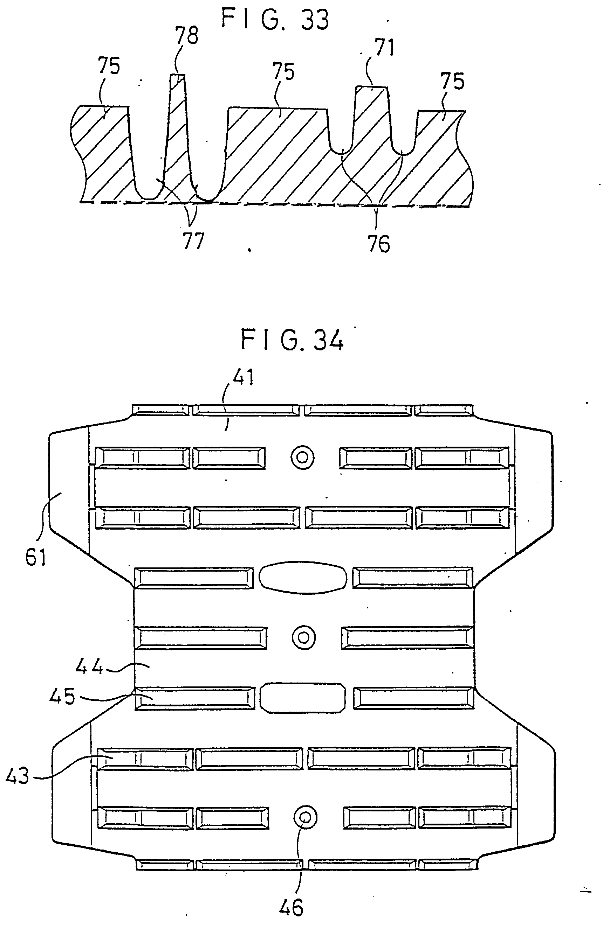

The ridge 71 is a project between the treads 75 sticking out above the surface level of the tread 75. The sub groove 76 a little higher than that of the main groove 77 which forms the anti-skid row 70 (see FIG. 33). If the level of the sub groove 76 is lowered, the gripping force and repulsive force of ridge 71 is reduced.

The bottom edges of the ridge 71 and sub groove 76 may preferably be tapered to a comparatively greater radius.

The longitudinal length or the width of the ridge 71 and the sub groove 76 may preferably about the same. And the ridge 71 may preferably not extremly wide and about 4 to 6 mm at the top is most desirable. Narrower design may result in weak gripping force and wider design in less durabily from its lack of compliance.

The ridge 71 expands and contracts with its tip trembling from its elasticity and sticks into the road surface only upon starting and braking. Therefore, it is desirable that the ridge is wide across the bottom, strong enough, having upward repulsive force, and not being susceptive to excessive lateral trembling.

In order to achieve this, as shown in FIG. 33, the ridge 71 formed so that the height is less than that of the be resilient ridge 78 and the width is greater than that of the resilient ridge 78.

The ridges 71 formed in the anti-skid row 70 neighboring the both walls and the tread 75 are running in the same direction with an angle. The angle serves as a mark to distinguish tires from each other and as an edge to avoid lateral sliding.

Further, the main groove 77 and the sub groove 76 are connected to aid an instantaneous evacuation of snow, ice, and dirt taken therein.

Next, a preferred embodiment of a belted tire having the second configuration is set forth hereinafter referring to figures.

The belted tire, as shown in FIG. 31, comprises rubber layer 2 with a lip 61 and is the same as the one shown in FIG. 1. The rubber layer 2 comprises a first rubber layer 3 defining the outer surface and a second rubber layer 4 defining the back surface.

A feature of the belted tire having the second configuration according to the present invention is the shape of the lip 61. A plurality of lips 61 is provided at opposite edges protruding out of the rubber laminate, extending circumferentially extending uniformly spaced apart.

The lip 61 serves as means to secure the belted tire 1 all along the cicumferencial tread 171 of the tire 17, fastening the belted tire 1 inwardly toward the rotational axis of the tire.

FIG. 31 illustrates a preferred embodiment for the lip 61. The figure shows the lip not being bent to aid in the understanding.

When applied to a tire, the lips 61, 61 are bent inwardly toward the rotational axis of the tire 17 and are capable of holding the tire 17 on opposite sides.

Each lip 61 is provided with a hole 65 or the like to be hooked with the corresponding securing memeber.

The tip of the lip 61 is tapered so that the lip can bends to fit the arc of the tire 17 when being fastened toward the rotational axis of the tire. In other words, the flexible surface 41 and the tread 171 closely contact each other.

It is noted that the shape of the lip 61 is not limited to the one described above.

The first rubber layer 3, defining the surface of rubber laminate 2, is provided with a tread pattern. Preferred embodiments of the tread pattern are already described in detail referring to FIG. 31.

The second rubber layer 4, defining the back surface of the rubber laminate 2, is provided with a flexible surface 41 to fit the tread 171 of the tire 17 whereon the belted tire 1 is secured. The flexible surface 41 may preferably be provided with many independent protrusions 46 at the axial center of the tread formed as independent round-top protrusions. The height of the protrusion is about the same as the level of the tire-engaging portion 45 shown in FIG. 3.

By forming many independent protrusions in combination with lateral grooves 44 and flexible surface 45 which are shown in FIG. 3 and described in connection with a belted tire having the first configuration, displacement of the belted tire during operation can be reduced and immediately restored.

When a belted tire according to the present invention having the second configuration applied to front wheels of an FF vehicle, the independent protrusion 46 prevent lateral displacement upon hard cornering and circumferencial displacement on hard braking or starting to a minimum.

The independent protrusion 46 also aid in dissipating heat efficiently while running on a normal road where the asphalt surface is warmed by sunbeam and the temperature of the tire tends to rise accordingly. The heat generated by friction between the belted tire and the tire can be dissipated as well.

The flexible surface 41 may preferably be formed with a plurality of protrusions 43 along its axially opposed edges for abutting against shoulders 172 of the vehicle tire 17. The protrusion 43 is the same to the detail as the one described in connection with the belted tire having the first configuration referring to FIG. 4.

Each rubber layer is made from the same material described in connection with the belted tire having the first configuration according to the present invention. The total thickness is also the same.

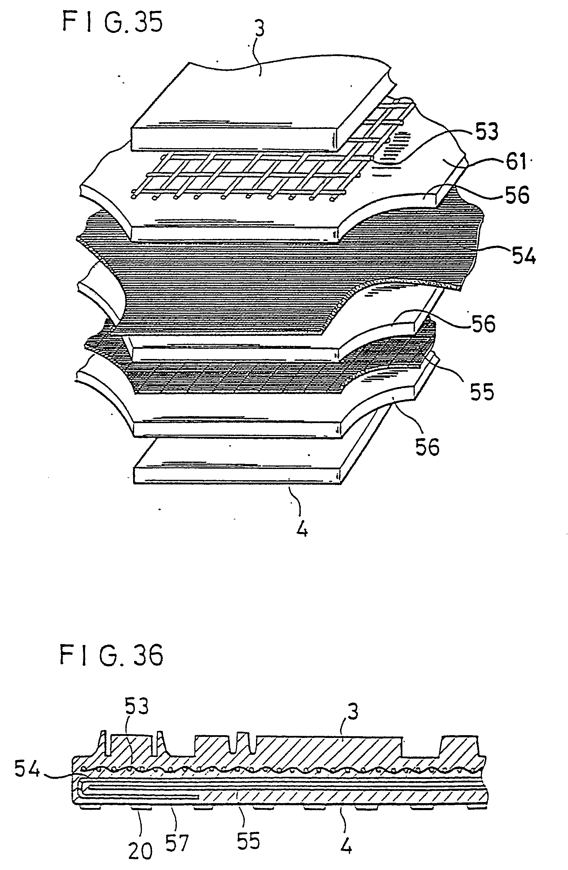

The rubber layer 2 may preferably comprise, as shown in FIG. 35, at least a mesh layer 53, a sailcloth-like layer 54, a fiber network layer 55, between the first rubber layer 3 ( surface of the rubber layer 2) and the second rubber layer 4 (back surface of the rubber layer 2).

A plurality of thin threads as lateral threads and a plurality of thick threads 1 to 1.5 mm in diameter formed by twisted threads as longitudinal threads are woven into a mesh defining the mesh-like layer. When manufactured, the belted tire is adhered to the rubber layer with an adhesive agent for rubber and fiber such as Kemlock 402. Being vulcanized, the rubber fuses into the mesh and aids in sticking the layers together.

Sailcloth-like layer 54 comprises a woven layer resembling sailcoth.

Fiber network layer includes many fibers extending longitudianally preventing longitudinal distortion of the belted tire. Fibers taken as an example may be amorphous fiber, ceramic fiber, carbon fiber, piano wire or the like. Fibers, when being woven as warp yarn of a plain weave to form a belt-core-like network, increase the strength of the laminate and adhesive property to the rubber.

As shown in FIG. 36, at least one layer of these mesh-like layer 53, sailcloth-like layer 54 and fiber network layer 55 may preferably be bent at the opposite ends of the belted tire and be pressed and adhered therein during the vulcanization/shaping of the rubber laminate 2 to form a reinforcing layer 57.

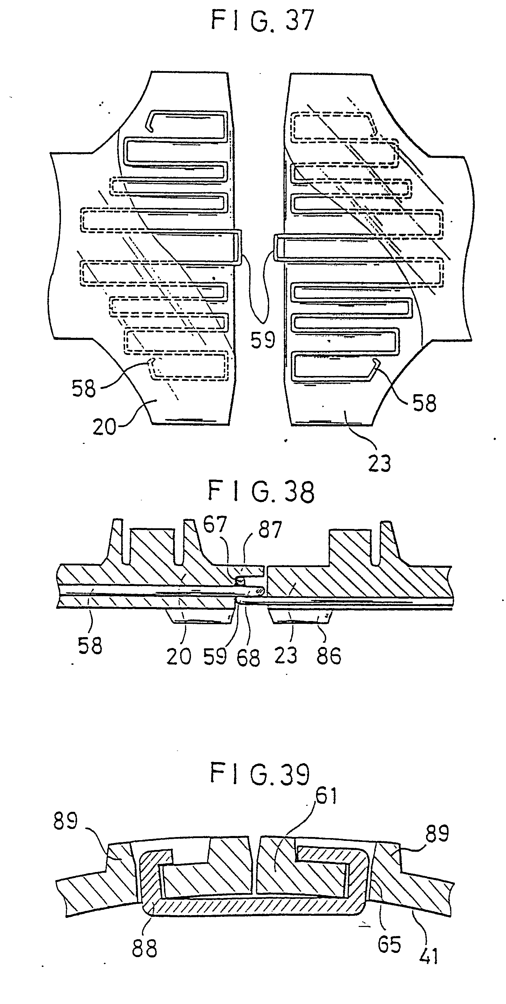

More preferably, opposed ends of the belted tire may include a reinforcing member 58 set forth in FIG. 37. Any material which increases the strength of the end 20 of the rubber laminate of the belted tire mechanically may be utilized for the reinforcing member 58. The spring wire bent into a shape resembling that of the end of the rubber laminate and being embedded into the rubber may be preferably utilized as a reinforcing member. Moreover, a portion of this reinforcing member 58 may preferably protrudes from the end 20 of the rubber laminate and functions as locking means 59 hereinafter set forth.

Upon fitting the belted tire 1 around tire 17, it is connected by the locking means 59. The locking means 59 connects the opposed ends of the belted tire when mounted on the tire 17.

Any shape of the locking means 59 is availabe as long as it connects the opposed ends of the belt with some clearance after connecting the ends of the belted tire with connecting means hereinafter set forth.

FIGS. 37 and 38 illustrate an example of this locking means 59. The locking means shown in FIGS. 37 and 38 which also functions as a reinforcing member 58, comprises a portion of the reinforcing member 58 which protrudes from the end 20 of the rubber laminate to form a rectangle and the edge of which bends orthogonally against the tread 25 of the belted tire to form a hook. A portion of the other reinforcing member included in the other end 23 of the rubber laminate also protrudes from the end 23 to form a rectangle having a hole therein so that it can be hooked by the aforementioned hook.

Another locking means 59 comprises longitudinal grooves formed on the flexible surface of the opposed ends of the laminate 2 and a rod-shaped member opposed ends of which bend like a hook and which is hang over both longitudinal grooves.

Such a locking means 59 preferably does not protrude from the surface or the back surface. For example, as shown in FIG. 38, covering means 87, protecting means 86 which is formed on the end of the rubber laminate and cover the locking means 59 improves the durability of the locking means 59 during driving especially a long driving.

After fitting the belted tire 1 on the tire 17, two lips positoned on the ends of the rubber laminate 2 is connected tightly by the connecting means from the flexible surface as shown in FIG. 39. The connecting means is preferably a rod-shaped member both ends of which all bent and are inserted in holes 65 of lips 61 to connect the lips. But it is not limited to the one mentioned above.

It is preferable to make a protecting at the hole 65 of the lip 61 to avoid a deface of the end of a rod-shped member inserted in the hole 65.

The belted tire 1 is securely mounted around tire 17 with a fastening means which pulls each lips inwardly loward the rotational axis of the tire when fitted to the tire 1.

The fastening means may comprise fastner 10 to be disposed on the outer side of a wheel, partially illustrated in FIGS. 9 and 10, and a linkage 16 to be disposed on the inner side of the wheel (demonstrated in FIGS. 11 AND 12). But it is not limited to the one mentioned above.

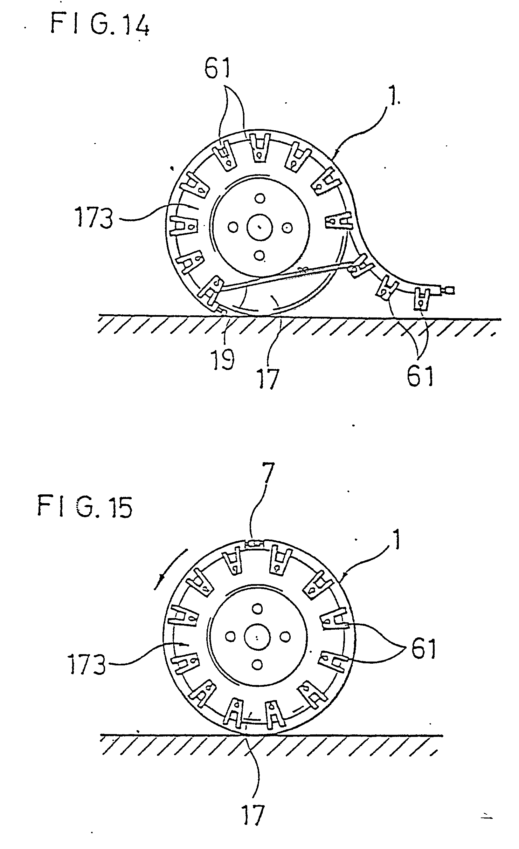

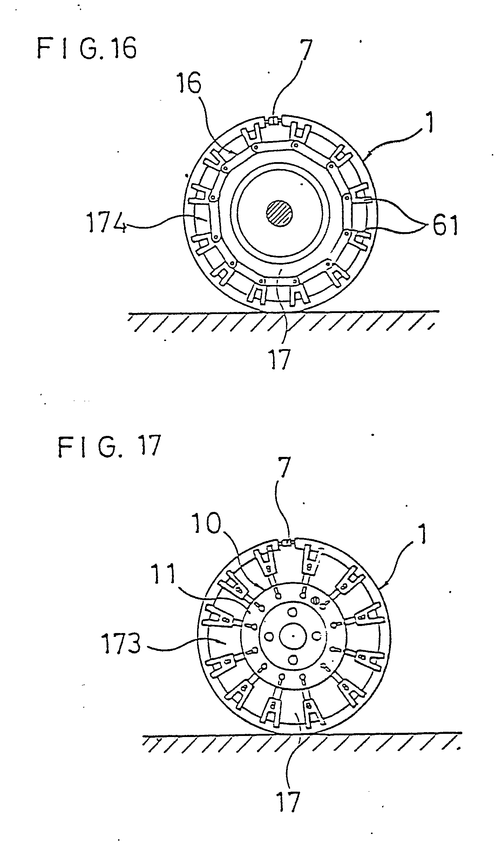

The securing of the belted tire according to the present invention onto the vehicle tire 17 is hereinafter set forth referring to FIGS. 14 through 17. FIGS. 14, 15 and 17 are views taken from outer side of the wheel, and FIG. 16 is from inner side of the wheel.

Referring to FIG. 14, the belted tire 1 is placed over upper part of the vehicle tire 17. The belted tire 1 is temporarily held in place by a band 19 between two appropriate lips 61.

The vehicle tire 17 is then turned counterclockwise until the opposite ends of the belted tire 1 or the coupling means 7 is substantially at the top of the vehicle tire 17, as shown in FIG. 15. The male and female members 8 and 9 are coupled and tightened as set forth above by means of the tool 84 to facilitate a close contact between the flexible surface 41 and the tire tread 171. Preferably, two fastening belts 5 are alternately tightened so that two belts are equally tightened to exhibit an identical tension.

In the second configration, as shown in FIG. 38, a hook member 67 and a hook hole member 68 constituting a locking means 59 are hooked each other. Next, in the second configration, the lips of the opposed ends of the belted tire 1 are fitted by the coupling means 88. Here, the locking means 59 is applied to have some clearlance or play as shown in FIG. 39.

Next, the linkage 16 is mounted on the inner side 174 of the vehicle tire 17, as shown in FIG. 16. The catches 163 are serially inserted through the slots 65 of the corresponding lips 61 by appropriately pivotting the link 161 of the linkage 16 from the starting end 164 to the finishing end 165. The starting and finishing ends 164 and 165 are engaged with the same lip 61 to complete the annular linkage 16. It is to be noted that this is a simple groping process carried out by slipping hands into the inner side 174 of the wheel from a gap or opening between the tire 17 and the fender (not shown).

At the stage when the attachment of the linkage 16 on the inner side 174 of the vehicle tire 7 is completed, tension is applied onto the lips 61 only at the inner side 174 of the vehicle tire 17. However, disposition or inclination of the belted tire 1 does not take place since the fastening belts 5 securely fasten the belted tire 1 facilitating a close contact of the flexible surface 41 with the tire tread 171. Tensions applied to the lips 61 at opposite ends 61 are balanced by subsequently pulling the lips 61 at outer side of the vehicle tire 17 with the fastener 10, to thereby secure close contact between the flexible surface 41 and the tread 171 of the vehicle tire 17.

The lips 61 on the outer side 173 of the vehicle tire 17 is pulled toward the center of the tire 17 by the fastener 10 as described hereinafter.

As illustrated in FIG. 9, the catches 131 of the sliding members 13 are mated through the slot 65 of the corresponding lips 61, the cable 15 is then wound by the take up unit 12 to translate sliding members 13 along the elongated slots 112 for pulling the lips 61 inwardly toward center of the tire 17. In the fastener 10, a substantially equal tension is exerted throughout the cable 15 by function of the pulleys 141, 142 and 143, and consequently, a substantially uniform stress is applied onto the lips 61. The belted tire 1 is thus securely fixed over the tire 17.

Since the sliding memebers 13 extend through the slits 113 formed at regular intervals on the radially outer circumference of the ring member 11, the distances between the adjacent sliding lips 13, that is, the distances between adjacent lips 61 remain constant. Therefore, mutual position of the securing memebers 6 is not changed in operation even during acceleration or deceleration.

The fixing of the belted tire 1 over the vehicle tire 17 is completed by the above-described procedure. The belted tire 1 may be removed from the tire 1 by carrying out the reverse precedure.

For a two-wheel drive vehicle, it is enough if the belted tires according to the present invention are mounted on driving wheels (front or rear wheels) although they may be mounted on all of the four wheels. For a four-wheel drive vehicle, the belted tires may also be mounted on either front and/or rear wheels.

The behavior of the belted tire 1 during operation on vehicle tire 17 is hereinafter set forth.

The tire contour is different between the road-engaging portion and other portion of the tire even during a drive on pavement in a beeline at a constant speed. Various stresses are exerted on the tire in axial and circumferential directions, particularly during acceleration, deceleration and cornering. Stresses applied onto the tire 17 and the deformation of the tire due to the stresses become augmented and complicated on snow, mud or rough road. It is necessary that the belted tire 1 is securely fixed over the tire 17 to avoid displacement and disengagement under such adverse conditions.

The belted tire according to the present invention is strongly tightened over the tread 171 of the vehicle tire in its circumferential direction by two or more fastening belts 5. Therefore, the belted tire is not likely to be displace even at a high velocity. If one fastening belt 5 should be instantaneously loosened due to an axially uneven deformation of the vehicle tire 17 in such occasion as cornering, the other fastening belt 5 firmly holds the belted tire 1 in place until the loosened belt is retightened.

The belted tire according to a second configuration of the present invention enables a long time and long distance drive without displacing even at a high velocity, since the belted tire having a fiber network layer 55 along its longitudinal axis which includes carbon fibers, piano wires or the like tightly and being embedded in the opposed ends of it a reinforcing member 58 a portion of which also functions as longitudinal locking means 59 of the belted tire.

The belted tire 1 is brought into a close contact with the tread 171 of the tire 17 throughout its circumference by means of a plurality of securing members 6 which tighten the belted tire 1 in its axial direction. An axial displacement of the tire is thus avoided even under the adverse conditions as mentioned above. Particularly, the protrusions 53 along axially opposed edges of the flexible surface 41 of the belted tire 1, if provided, prevent axial displacement of the belted tire 1 with certainty by abutting against the shoulders 72 of the vehicle tire 17.

Since the tread pattern comprise the first zone 31 as described above, the belted tire 1 according to the present invention is imparted with an increased traction to allow a safe operation on snow, mud, sand, gravel and the like as well as on normal pavement. When first and second zones 31 and 32 are alternately disposed along the longitudinal axis of the belted tire 1, the second zone 32 stops the slipping occurred in the road engaging portion of the first zone 31 to enhance driving safety.

The belted tire 1 according to the present invention

0323524

- 26 -

may be used on normal pavement as well as on bad roads exemplified by snow, and there is no need to put on and off the belted tire to cope with the road conditions such as presence/absence of the snow on roads.

Accoding the belted tire 1 of the second configuation in the present invention, the tread pattern comprises a plurality of units each having a first zone circumferentially of the tire and a second zone at either side of the first zone, the first zone having a cavity 74 positioned adjacent the axial central for taking therein snow, dirt and sand and the like and a ridge 71 at either end side of axially outward of the tire, the second zone having a resilient ridge 73 positioned adjacent the axial central of the tire.

To this end, the cavity 74 hold the packed snow into the central portion of the tire tread at the snow road when the tire rotates at higher speed on increasing the speed, not push aside of the tire, resulting in preventing the layer of the pushed-aside snow from the slipping.

Also, the specific tread pattern formed by the ridge 71 and the resilient ridge 73 heighten the prevention of the slippage on the icy snow or wet road and heighten the running performance when starting or baraking.

Due to the difference of the road condition between the icy road and the icy snow, the relative area ratio is changed according to the application of use to more heighten the running performance.

Further, the belted tire 1 of the present invention has an improved durability. The rubber laminate 2 is imparted with a particularly improved strength when reinforcing member 22 is embedded in the rubber laminate 2, resulting in a significantly improved durability.

INDUSTRIAL APPLICABILITY

According to the belted tire of the present invention, upon mounting on the tire, the circumferential tightening and the axial fastening with respect to the tire aids in firm fixation of the belted tire. Therefore, no displacement or disengagement occurs even when various forces are applied to the tire in operation.

By selecting a proper tread pattern, a safe and comfortable drive is capable under adverse conditions including snow, muddy road, sandy soil and gravelled road.

Further, it does not require any labor to cope with road conditions such as putting on and off chains or the like when snow or bare pavement is presented on road.

Another advantage of the belted tire according the present invention is its profound durability, especially the belted tire with reinforcing member embedded therein has great strength and considerable improvement in durability can be achieved.

CLAIMS:

1. A tread pattern of a tire having a tread surface in contact with a road surface forming recessed portions recessed from the tread surface, comprising a resilient protrusion provided uprightly at a position adjacent an inside wall circumferentially of the tire, the tip end thereof having at least one protrusion protruding above the tread surface.

2. A tread pattern according to claim 1 wherein said resilient protrusion is formed at the recessed portions formed adjacent the axial central of the tire width.

3. A tread pattern according to claim 1 wherein said resilient protrusion is plate-shaped extending along a tire width direction or a direction inclined from the tire width direction.

4. A tread pattern according to any one of claim 1 to 3 wherein the tip end of said resilient protrusion is tapered or rounded.

5. A tread pattern of a tire having a tread surface in contact with a road surface forming main recessed portions recessed from the tread surface, the tread pattern comprising a plurality of units each having a first zone circumferentially of the tire and a second zone at either side of the first zone,

the first zone having a main anti-skid row positioned adjacent the axial central forming the cavity for taking therein snow, dirt and sand and the like disposed at the predetermined interval circumferentially of the tire, a ridge positioned at opposed edges of axially outward from the main anti-skid row, disposed circumferentially apart from said tread surface and sub recessed portions with a tip protruding from said tread surface and a driving row comprising said tread surface and said main recessed portions and being disposed axially outward position of said first and second zones,

the second zone having at least a tread pattern according to any one of claim 1 to 4.

6. A belted tire adapted to be mounted over a vehicle tire, comprising at least one layer belt-shaped member having predetermined patterns on its surface and a flexible surface on its back surface for allowing a close contact with the tire tread, comprising:

a rubber layer member having lips disposed at predetermined interval along the longitudinal axis of said belt-shaped member and extending substantially perpendicular to said belt-shaped member,

coupling means functioning to connect said lips disposed at said opposed ends of said belt-shaped so as to allow a close contact of said flexible surface of said belted tire with said tread surface of said tire,

a pair of locking means disposed at opposed ends of said belt-shaped member and functioning to connect said opposed ends during mounting to said tire to give some clearance or play after connecting said lips, and

securing means for fastening said lips inwardly of the tire during mounting to said tire.

7. A belted tire according to claim 6 wherein said belt-shaped rubber member is a laminate of a plurality of rubber layers, between which at least a mesh-like layer, sail cloth-like layer, and fiber network layer incorporating fibers along the longitudinal axis are included from the tread surface to the flexible surface.

8. A belted tire according to claim 6 or 7 wherein said fiber network layer is a fabric interwoven longitudinally by amorphous fiber, ceramic fiber, carbon fiber or piano wire.

9. A belted tire according to any one of claim 6-8 wherein said belt-shaped rubber member is a laminate of rubber layers, an end reinforcing member being embedded between the rubber layers at the both ends.

10. A belted tire according to claim 9 wherein a portion of said end reinforcing member protrudes from the end of the rubber layers, functioning as said locking means.

11. A belted tire according to any one of claim 6-10 wherein said lips are narrowed in width towards the tip and have at least one hole, and provided with a protecting protrusion at base porion side of said hole.

12. A belted tire according to any one of claim 6-11 wherein said flexible surface has independent circular projections adjacent the axial central of the tire width, and has protrusions along axially opposed edges of the belted tire abutting against the shoulder of the mounted tire.

F I G. 1

FIG.2

FIG. 3

FIG. 4

FIG.5

FIG. 6

# FIG. 7

# FIG. 8

0323524

FIG. 9

FIG.10

FIG. 11

FIG. 12

162

162

161

162

161

164

162

161

16

165

F I G. 13

61

167

651

66

662

166

FI G.14

FI G.15

0323524

FIG.16

FIG.17

FIG. 18

FIG. 19

FIG. 20

FIG. 21

FIG. 22

FIG. 23

FIG. 24

FIG. 25

FIG. 26

FIG. 27

FIG. 28

FIG. 29

FIG. 30

F I G. 31

F I G. 32

FIG. 33

FIG. 34

F I G. 35

F I G. 36

0323524

FIG. 37

FIG. 38

FIG. 39

# INTERNATIONAL SEARCH REPORT

International Application No PCT/JP88/00683

## I. CLASSIFICATION OF SUBJECT MATTER (if several classification symbols apply, indicate all) 6

According to International Patent Classification (IPC) or to both National Classification and IPC

Int.Cl$^4$   B60C11/04, 27/16, 27/10

## II. FIELDS SEARCHED

### Minimum Documentation Searched 7

| Classification System | Classification Symbols |
|---|---|
| IPC | B60C11/02-11/12, 27/10-27/18 |

### Documentation Searched other than Minimum Documentation to the Extent that such Documents are Included In the Fields Searched 8

| | |
|---|---|
| Jitsuyo Shinan Koho | 1926 – 1987 |
| Kokai Jitsuyo Shinan Koho | 1971 – 1987 |

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| Y | JP, U, 59-83106 (The Yokohama Rubber Co., Ltd.) 5 June 1984 (05. 06. 84) (Family: none). | 1, 3, 4 |
| Y | JP, B1, 50-41 (Michelin & Cie) 6 January 1975 (06. 01. 75) & SE, B, 365754 | 1 |
| Y | JP, A, 61-81206 (The Yokohama Rubber Co., Ltd.) 24 April 1986 (24. 04. 86) (Family: none) | 1 |
| Y | JP, A, 60-143108 (Honda Motor Co., Ltd.) 29 July 1985 (29. 07. 85) (Family: none) | 1, 4 |
| Y | JP, U, 59-136303 (Suzuki Takashi) 11 September 1984 (11. 09. 84) (Family: none) | 6, 11 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| August 16, 1988 (16. 08. 88) | August 29, 1988 (29. 08. 88) |

| International Searching Authority | Signature of Authorized Officer |
|---|---|
| Japanese Patent Office | |

Form PCT ISA 210 (second sheet) (January 1985)

| FURTHER INFORMATION CONTINUED FROM THE SECOND SHEET | | |
|---|---|---|
| Y | JP, A, 62-137209 (Bridgestone Corporation) 20 June 1987 (20. 06. 87) (Family: none) | 6, 11 |
| Y | JP, A, 61-241207 (Bridgestone Corporation) 27 October 1986 (27. 10. 86) (Family: none) | 6, 11 |
| Y | JP, Y1, 44-17207 (Toyo Tire and Rubber Co., Ltd.) 25 July 1969 (25. 07. 69) (Family: none) | 7, 8, 9 |

**V.☐ OBSERVATIONS WHERE CERTAIN CLAIMS WERE FOUND UNSEARCHABLE [10]**

This international search report has not been established in respect of certain claims under Article 17(2) (a) for the following reasons:

1.☐ Claim numbers_____ because they relate to subject matter [12] not required to be searched by this Authority, namely:

2.☐ Claim numbers_____ because they relate to parts of the international application that do not comply with the prescribed require-ments to such an extent that no meaningful international search can be carried out [13], specifically:

**VI.☐ OBSERVATIONS WHERE UNITY OF INVENTION IS LACKING [1]**

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest
☐ The additional search fees were accompanied by applicant's protest
☐ No protest accompanied the payment of additional search fees